# EUROPEAN PATENT APPLICATION

(11) **EP 1 615 461 A1**
(43) Date of publication of application: **11.01.2006**
(21) Application number: 03816460.4
(22) Date of filing: 04.11.2003
(51) Int. Cl.: H04Q 9/00

(54) **OPERATION MONITORING SYSTEM**

(30) Priority: 27.03.2003 JP 2003087308
(71) Applicant: Thermo System Co., Ltd., Tokyo 105-0003 (JP)
(72) Inventor: MASUNAGA, Mitsuo, Thermo System Co., Ltd., Tokyo 105-0003 (JP)
(74) Representative: Loisel, Bertrand
(86) International application number: PCT/JP2003/014074
(87) International publication number: WO 2004/086807

(57) **Abstract**

An operation monitoring system comprises a signal converter connected to a serial interface of an operation control portion of plural type reefer containers, a connection processing device which can connect to one or more signal converters and individually identifies an operation state of each the reefer container from an output signal, and a data collection server and a monitoring personal computer which can send to and receive from one or more connection processing devices via a container side wireless LAN device and a monitoring side wireless LAN device, the converter converts a short-distance transmission signal to the operation control portion and a long-distance transmission signal to the connection processing device side, and the connection processing device selects a communication method which is different in accordance with the type of the containers, acquires monitoring data from the converter, and converts the monitoring data into a predetermined data to send.

## Description

### Technical Field

The present invention relates to an operation monitoring system for always monitoring a state of equipment to be monitored, for example, a reefer container or the like, and more particularly to a technique which can monitor an operation state of plural types of equipments.

### Background Art

In a cargo transportation by a ship or the like, in the case that the cargo is constituted by perishable goods such as meats, agricultural products, marine products or the like, a reefer container is used for preventing rottenness and a decrease of freshness. The reefer container is structured such that a refrigeration unit for cooling the inside of the container is integrally provided, and an operation of the refrigeration unit is controlled so as to keep a temperature within the container to be in a previously set fixed low-temperature state on the basis of a detection signal from a temperature sensor detecting the temperature within the container. Further, since a cooling effect is deteriorated if frost is generated in an evaporator in a refrigerant circuit of the refrigeration unit, the structure is made such that a defrosting device is timely activated so as to melt the frost.

There is a case that the reefer container containing the perishable goods or the like is stored in a container yard in a port for a comparatively long period for waiting a ship in a shipping port or waiting land transport service in an unloading port. Accordingly, it is necessary to maintain the inside of the reefer container at a predetermined temperature even during the storage in the container yard or the like. Further, since a lot of reefer containers are stored in the container yard, a great deal of attention is required for making inspections of operation conditions of the containers one by one by a patrol of an observer every fixed time. Further, since it is hard to find occurrence of abnormality in real time in accordance with the patrolling method mentioned above, there has been conventionally proposed a remote monitoring system, for example, described in Japanese Unexamined Patent Publication No. 7-50882.

In order to achieve centralized monitoring of the reefer containers as described in Japanese Unexamined Patent Publication No. 7-50882, it is necessary that a power line sending and receiving means (a modem) is mounted to each of the reefer containers, in other words, only the reefer container to which the modem is mounted can be monitored. In particular, a mounting rate of the modem is low in old reefer containers, and comparatively new reefer containers without modems are not few. Accordingly, a sufficient labor saving effect can not obtained even by introducing the system as described in the above patent document. Further, since a serial interface of a control device installed in a reefer container is different in a communication method between manufactures, it is hard to achieve the centralized monitoring in this view.

The present invention is made by taking the problem mentioned above into consideration, and a technical object of the present invention is to provide an effective system for achieving labor saving by remote monitoring operation conditions of equipments to be monitored such as reefer containers or the like.

### Disclosure of the Invention

As a means for effectively solving the technical problem mentioned above, in accordance with a first aspect of the present invention, there is provided an operation monitoring system comprising:
a connection processing means capable of being connected to an operation control portion in one or a plurality of plural types of equipments to be monitored; and
a centralized monitoring means capable of sending and receiving with respect to one or a plurality of connection processing means via a communication means,
wherein the connection processing means selects a different communication method in accordance with the type of the equipment to be monitored so as to acquire monitoring data, and converts the monitoring data into a predetermined format so as to send.

In accordance with a second aspect of the present invention, there is provided an operation monitoring system as recited in the first aspect, wherein the operation control portion of the equipment to be monitored and the connection processing means are connected via a signal converting means, and the signal converting means converts between a short-distance transmission signal to the operation control portion side and a long-distance transmission signal to the connection processing means side.

In accordance with a third aspect of the present invention, there is provided an operation monitoring system as recited in the first aspect or the second aspect, wherein the connection processing means is provided with an isolation means for insulating and isolating the signal between the signal converting means side and the centralized monitoring means side.

In accordance with a fourth aspect of the present invention, there is provided an operation monitoring system as recited in the second aspect or the third aspect, wherein the signal converting means is provided with an isolation means for insulating and isolating the signal between the monitored equipment side and the connection processing means side.

In accordance with a fifth aspect of the present invention, there is provided an operation monitoring system as recited in any one of the first to fourth aspects, wherein the centralized monitoring means is constituted by a data collection server collecting output data from the connection processing means via a communication network, and a monitoring device connected to the data collection server, and sends abnormality detection data detected in the case that an operation state of the equipment to be monitored is abnormal, to a predetermined communication terminal device.

In accordance with a sixth aspect of the present invention, there is provided an operation monitoring systemas recited in anyone of the first to fifthaspect, wherein the equipment to be monitored is a reefer container, and the centralized monitoring means monitors in a centralized manner on the basis of reception of a device information, an operation information, an abnormality information, an alarm of a communication abnormality and the like in the reefer container.

### Brief Description of the Drawings

Fig. 1 is an explanatory view schematically showing a preferable embodiment in which an operation monitoring system in accordance with the present invention is applied to monitoring of a reefer container;
Fig. 2 is a circuit diagram showing a schematic structure of a signal converter 3 in Fig. 1;
Fig. 3 is a block diagram showing an outline structure of a connection processing device 4 in Fig. 1;
Fig. 4 is a block diagram showing a serial communication circuit installed in each of channel boards 42 of the connection processing device 4 in Fig. 3; and
Fig. 5 is a circuit diagram showing a part of the channel boards 42 in Fig. 3.

### Best Mode for Carrying Out the Invention

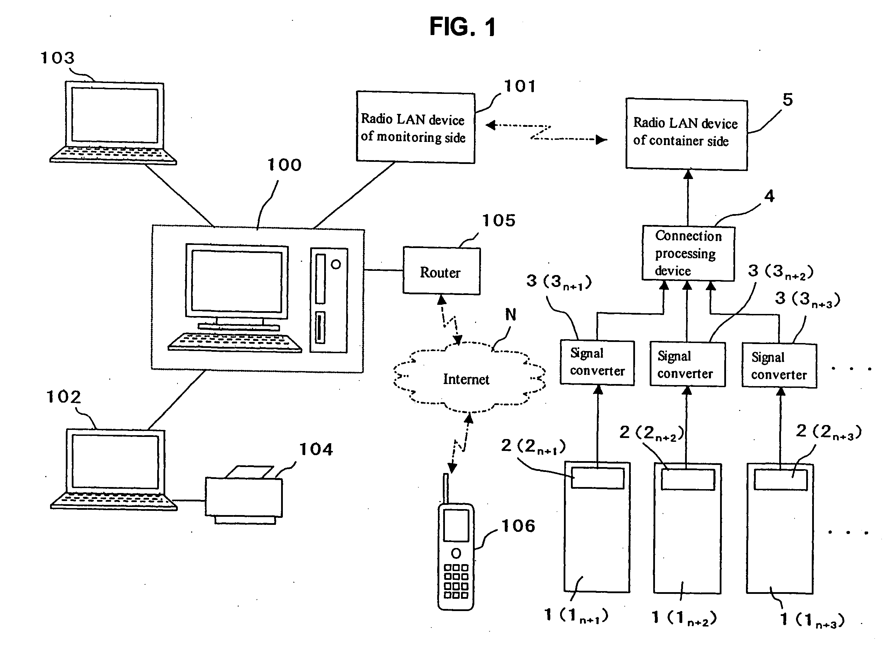

A description will be given below of a preferable embodiment in which an operation monitoring system in accordance with the present invention is applied to monitoring of a reefer container with reference to the accompanying drawings. Fig. 1 is an explanatory view schematically showing a structure of the operation monitoring system in accordance with the present embodiment.

Reference numeral 1 (1n+1, 1n+2, 1n+3, ...) denotes a reefer container stored in a container yard existing in ports and harbors in various locations, which corresponds to the equipment to be monitored described in the first aspect of the present invention. Each of the reefer containers 1 has a refrigeration device and a defrosting device (not shown) built-in, and is operated by being connected to a power source provided in each of the container yards.

A temperature inside of each of the reefer containers 1 is full-time detected by a temperature sensor, and driving of the refrigeration apparatus and the defrosting device is controlled to maintain a previously set temperature by an operation control portion 2 (2n+1, 2n+2, 2n+3, ...) on the basis of a detection value from the temperature sensor. These states are converted into serial signals of RS-232C by a serial interface (not shown), and can be communicated with an external portion via a connector.

Reference numerals 3 (3n+1, 3n+2, 3n+3, ...) denotes a signal converter connected to the operation control portion 2 (2n+1, 2n+2, 2n+3, ...) of the reefer container 1 (1n+1, 1n+2, 1n+3, ...), reference numeral 4 denotes a connection processing device which can connect one or a plurality of signal converters 3, and reference numeral 5 denotes a container side wireless LAN device. The signal converter 3 corresponds to the signal converting means described in the first aspect of the present invention, the connection processing device 4 corresponds to the connection processing means described in the first aspect, and the container side wireless LAN device 5 corresponds to the communication means described in the first aspect. Only one connection processing device 4 is shown in Fig. 1, however, a plurality of connection processing devices 4 can be connected to the container side wireless LAN device 5. Further, a plurality of reefer containers 1 (operation control portions 2) can be connected to the connection processing device 4 respectively via the signal converter 3. In other words, it is possible to acquire monitoring data of a plurality of channels.

Reference numeral 100 denotes a date collection server, which corresponds to the centralized monitoring means described in the first aspect of the present invention. To the data collection server 100, there are connected a monitoring side wireless LAN device 101, a monitoring personal computer 102, and a relay personal computer 103 for accumulating all the container information of the container yard, a carry-in-and-out information and the like from a host computer (not shown). The monitoring side wireless LAN device 101 corresponds to the communication means described in the first aspect of the present invention, the monitoring personal computer 102 corresponds to the monitoring device described in the fourth aspect, and a printer 104 or the like is connected to the monitoring personal computer 102.

Further, the data collection server 100 is connected to an internet N via a router 105. The internet N corresponds to the communication network described in the fourth aspect of the present invention, and a person in charge of management of the reefer container can be in communication with the data collection server 100 via the internet N by a communication terminal device such as a portable telephone 106 or the like in possession.

The signal converter 3 is structured such as to convert a signal in a mode RS-232C output from the operation control portion 2 of the reefer container 1 via the serial interface into a serial signal of a mode RS-422 so as to output.

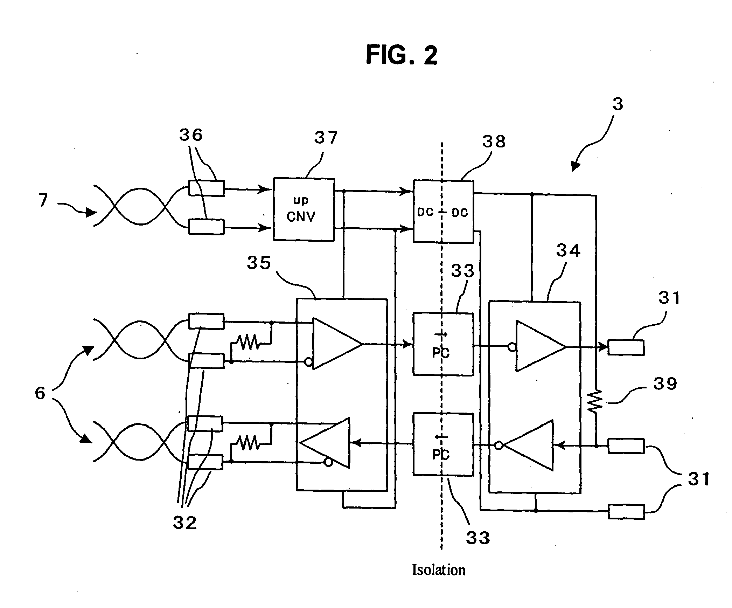

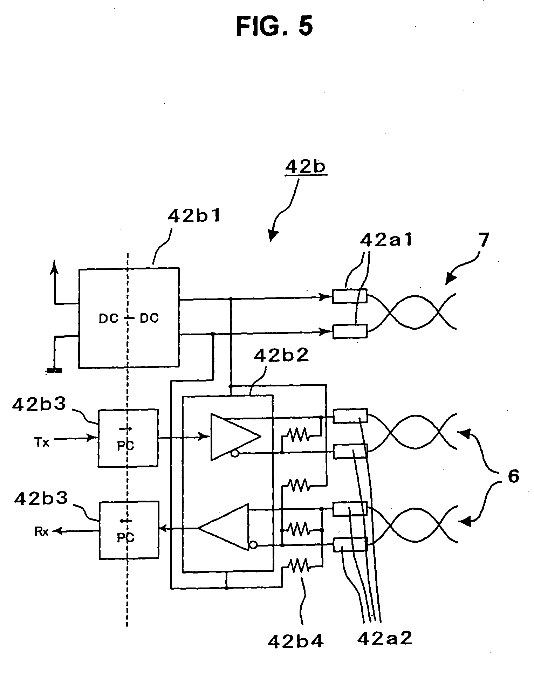

Fig. 2 is a circuit diagram showing an outline structure of the signal converter 3. In particular, the signal converter 3 is provided with an RS-232C input and output terminal 31 connected to the container side, an RS-422 input and output terminal 32 connected to the connection processing device 4 side, a photo coupler 33 for insulating and isolating a signal between the RS-232C input and output terminal 31 and the RS-422 input and output terminal 32, an RS-232C driver receiver 34 performing a signal conversion between the container side input and output terminal 31 and the photo coupler 33, an RS-422 driver receiver 35 performing a signal conversion between the connection processing device 4 side input and output terminal 32 and the photo coupler 33, a voltage compensation circuit 37 compensating a voltage drop of an electric power input to a power source 36 from a DC-DC converter 42b1 in Fig. 5 mentioned below via a power source cable 7 to a predetermined voltage, a DC-DC converter 38 isolating the supplied power between the RS-422 driver receiver 35 side and the RS-232C driver receiver 34 side, and a resistance 39 for detecting a connection to the reefer container 1. The photo coupler 33 and the DC-DC converter 38 correspond to the isolation means described in the second aspect of the present invention.

In this case, since a connector shape and an arrangement of a connector pin in the reefer container 1 (the operation control portion 2) are different in accordance with a manufacturer and the type of the reefer container, the signal cable connecting between the reefer container 1 and the RS-232C input and output terminal 31 of the signal converter 3 is selected and used in correspondence to the connector shape and the arrangement of the connector pin in accordance with the manufacturer and the type of the reefer container 1.

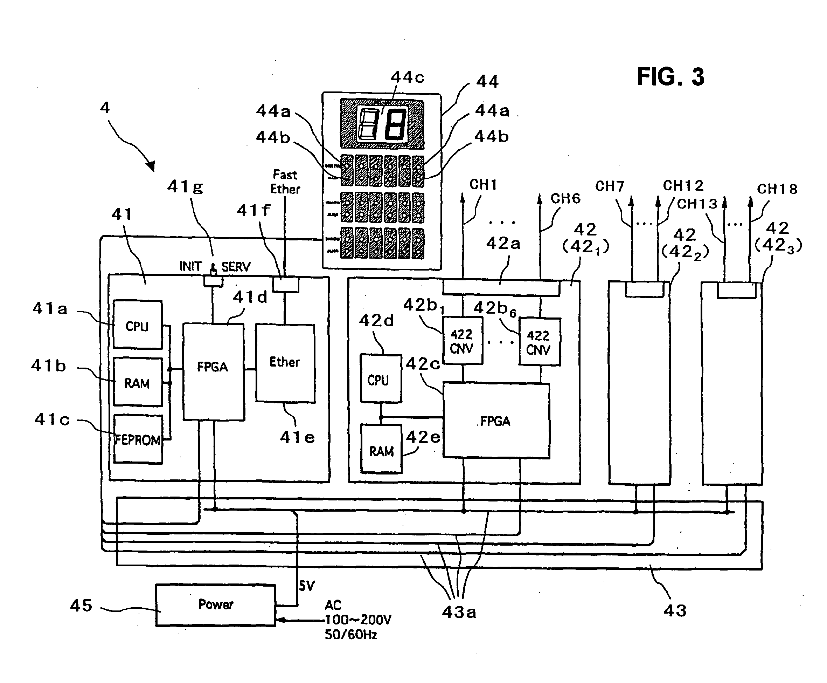

Fig. 3 is a block diagram showing an outline structure of the connection processing device 4. As shown in Fig. 3, the connection processing device 4 is provided with a main board 41, a plurality of channel boards 42, a bus board 43, a display panel 44, and a power source circuit 45. Devices mounted to the main board 41 and each of the channel boards 42 are connected via a lot of bus lines 43a provided in the bus board 43.

The main board 41 is provided with a main CPU 41a, an RAM 41b, an FEPROM 41c, an FPGA 41d, an Ethernet (trademark of Fuji Xerox Co., Ltd.) interface 41e and an Ethernet connector 41f for communicating with an external portion, and a mode changing switch 41g.

Each of the channel boards 42 is provided with an input and output terminal 42a capable of being connected to the RS-422 input and output terminal 32 of the signal converter 3 shown in Fig. 2 and having a plurality of channels (for example, six channels), RS-422 driver and receivers 42b1 to 42b6 with a power isolating function described in detail in Fig. 5, an FPGA 42c, and a channel CPU 42d and an RAM 42e connected to the FPGA 42c. Further, a data communication with the channel CPU 42d is performed by accessing to a dual port RAM (not shown) constructed in an inner portion of the FPGA 42c of each of the channel boards 42 from the main CPU 41a.

In this case, in the present embodiment, the connection processing device 4 has three channel boards 42 (42₁ to 42₃), however, it is possible to add more (for example, up to about nine) channel boards in correspondence to a size of the bus board 43. In this case, the channel board 42₁ can perform a communication process of six channels comprising CH1 to CH6, the channel board 42₂ can perform a communication process of six channels comprising CH7 to CH12, and the channel board 42₃ can perform a communication process of six channels comprising CH13 to CH18. In other words, it is possible to perform the communication process of totally eighteen channels.

The mode changing switch 41g is structured such as to select a processing mode of the connection processing device 4 to any one of a normal monitoring mode, an initial setting mode and a service mode. In the case that the normal monitoring mode is selected, a normal monitoring is performed on the basis of a device information of each of the reefer containers, drive and stop signals, an optimum temperature signal and the like input via the signal converter 3 connected to the input and output terminal 42a.

Further, in the case that the initial setting mode is selected by the mode changing switch 41g, it is possible to set an IP address, a net mask, a gateway address, and an ID for authenticating the connection processing device 4 (hereinafter, referred to as a device ID). The device ID corresponds to a name used at a time of giving a notice to the data collection server 100 via the container side wireless LAN device 5 and the monitoring side wireless LAN device 101 shown in Fig. 1, and can be set (changed) by a code comprising a character string of eight figures. In this case, the initial setting is performed only in a connection state between the connection processing device 4 and the personal computer.

Further, in the case that the service mode is selected by the mode changing switch 41g, it is possible to set an IP address (a first designated IP address and a second designated IP address) to which the monitoring data is sent, and an http unique port number of decimal number from an optional personal computer via a Web browser. In this case, it is necessary to change to the normal monitoring mode by the mode changing switch 41g after setting the IP address to be sent and the port number.

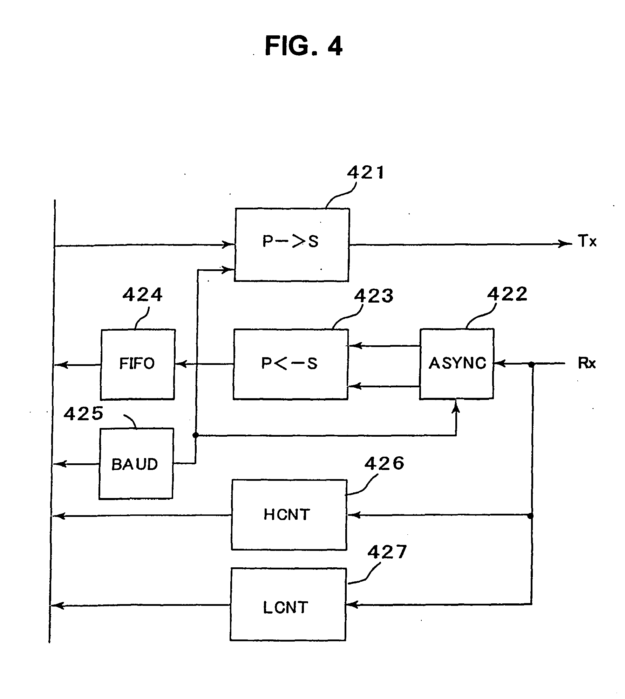

The serial communication circuits every channels CH1 to CH6, CH7 to CH12 and CH13 to CH18 are constructed in the FPGA 42c of each of the channel boards 42. Fig. 4 is a block diagram showing the serial communication circuit.

As shown in Fig. 4, the serial communication circuit in each of the channels installed in the FPGA 42c of the channel board 42 is provided with a parallel and serial conversion circuit 421 for sending in serial, a start-stop synchronous and synchronous signal extraction circuit 422, a serial and parallel conversion circuit 423 for receiving in serial, a data receiving buffer 424, a baud rate (a communication speed) pulse forming circuit 425, a high level signal and minimum pulse width extraction circuit 426, and a low level signal and minimum pulse width extraction circuit 427. The parallel and serial conversion circuit 421 is structured such as to convert bite data set by the channel CPU 42d into a stat-stop synchronous serial signal to which each of bits of start, stop and parity is added, on the basis of a clock pulse from the baud rate pulse forming circuit 425 so as to send Tx, the start-stop synchronous and synchronous signal extraction circuit 422 is structured such as to demodulate a sample timing of the serial data on the basis of the received Rx start-stop synchronous signal, the serial and parallel conversion circuit 423 is structured such as to sample the serial date in correspondence to the sample timing from the start-stop synchronous and synchronous signal extraction circuit 422 and extract the bite data except each of the bits of start, stop and parity, and the data receiving buffer 424 corresponds to a buffer which accumulates the received bite data until the channel CPU 42d picks up the received data, and can accumulate one packet or more.

In other words, the FPGA 42c of the channel board 42 can determine the baud rate of the operation state signal of the reefer container 1 (the operation control portion 2) which is different in accordance with the manufacturers and the types, communicate in a communication protocol in correspondence thereto, and communicate with a superior position in accordance with a common format via the Ethernet interface 41e of the main board 41, on the basis of the function of detecting the connection to the reefer container 1 in each of the channels and the detection of the pulse width of the signal input via the signal converter 3, in accordance with the circuit structure mentioned above. Further, since each of the channel boards 42 (42₁ to 42₃) performs the communication process per the channels CH1 to CH6, CH7 to CH12, CH13 to CH18, ... in the inner portion thereof, the main CPU 41a in the main board 41 can acquire the monitoring data of all the channels at an optional timing required from the superior position via the Ethernet interface 41e.

Fig. 5 is a circuit diagram showing inner portions of the RS-422 driver receivers 42b1 to 42b6 in the channel board 42 in Fig. 3. As shown in Fig. 5, the RS-422 driver receiver 42b with the power source isolating function has the DC-DC converter 42b1 and the RS-422 driver receiver 42b2 built-in, the RS-422 driver receiver 42b2 is insulated and isolated by the photo coupler 42b3, and is connected to Tx and Rx in Fig. 4. The DC-DC converter 42b1 insulates and isolates the electric power of the channel board 42 so as to supply to the RS-422 driver receiver 42b2. Further, the electric power is also supplied to the power source terminal 36 of the signal converter 3 shown in the previous Fig. 2 via the power source cable 7 from the power source terminal 42a1. Reference symbol 42b4 denotes a resistance for detecting the connection to the signal converter 3. In this case, the photo coupler 42b3 and the DC-DC converter 42b1 correspond to the isolation means described in the third of aspect of the present invention.

As previously described, since the signal of the RS-232C output from the operation control portion 2 of the reefer container 1 is converted into a differential signal of the RS-422 for the long-distance transmission in the signal converter 3, it is possible to extend a signal cable 6 connecting between the RS-422 input and output terminal 32 of each of the signal converters 3 shown in Fig. 2, and the input and output terminal 42a in the channel board 42 of the connection processing device 4 shown in Fig. 5 (the input and output terminal 42a2 in Fig. 5) upto about 200 m. Further, since a voltage drop occurs in the power source voltage supplied to the signal converter 3 due to the resistance of the power source cable 7, however, the voltage drop is compensated by the voltage compensating circuit 37 shown in Fig. 2, it is possible to extend the power source cable 7 upto about 200 m.

Further, it is necessary to make the signal cable from the RS-232C serial interface of the operation control portion 2 in the reefer container 1 as short as possible for preventing a damage of the operation control portion 2 in the reefer container 1 due to an induced lightning stroke. However, in accordance with the present invention, since the signal and the power source are insulated and isolated by the photo coupler 33 and the DC-DC converter 38 in the signal converter 3, the signal and the power source are insulated and isolated by the photo coupler 42b3 and the DC-DC converter 42b1 in the connection processing device 4, and the RS-232C signal is converted into the RS-422 differential signal in the signal converter 3, it is possible to prevent the damage due to the induced lightning stroke and it is possible to achieve the long-distance transmission.

In the case that the distance between the reefer container 1 and the connection processing device 4 is short, and it is not necessary to convert the RS-232 signal from the operation control portion 2 into the RS-422 signal for the long-distance transmission, it is possible to connect the connection processing device 4 to the RS-232C serial interface of the operation control portion 2 without interposing the signal converter 3.

In the case that the communication between the reefer container 1 (the operation control portion 2) and the channel board 42 is established, the device information, the operation information and the abnormality information of the reefer container 1 are transmitted to the date collection server 100 via the connection processing device 4 (the channel board 42, the bus board 43 and the main board 41) from the operation control portion 2. Further, the communication abnormality between the channel board 42 and the operation control portion 2 occurs on the basis of a power off of the reefer container 1 and a defect of the connection system, and is transmitted as an alarm to the data collection server 100 from the main board 41.

Further, the operation control portion 2 outputs an alarm code at a time when the abnormality occurs in an interior operation. In this case, each of the channel CPU 42d of the channel boards 42 (42₁ to 42₃) communicates the alarm code from the reefer container 1 side to the superior position (the data collection server 100) as it is, and a corresponding display of an abnormality content by the alarm code which is different in accordance with the manufacturer and the type of the reefer container 1, is performed in the superior position.

The monitoring data sent from the Ethernet interface 41e of the connection processing device 4 is constituted by a plurality of rows, the first row is constituted by a column showing a data type of the monitoring data, a column showing a device ID of the connection processing device 4 set in accordance with an initial setting mode, and a column showing a connection state and an operation state of each of the reefer containers 1, rows from the second row onward are constituted by a column showing a channel number, a column showing the connection state and the operation state of each of the reefer containers 1, a column showing a code of a manufacturer (a manufacturer code) of the reefer container 1, a column showing a container name, a column showing a set temperature, a discharge temperature, an intake temperature and the like, and a column displaying an alarm data in the case that the abnormality occurs.

The display panel 44 shown in Fig. 3 is provided in a front door of a casing of the connection processing device 4, and has a monitor lamp 44a and an alarm lamp 44b constituted by LED in correspondence to each of the channels in each of the channel boards 42, and a double-digit device number display portion 44c constituted by seven segment LED. The monitor lamp 44a and the alarm lamp 44b are structured such as to visually inform the communication state of each of the connected reefer containers 1 in accordance with a flashing pattern, a combination of lighting and extinction or the like via the main CPU 41a and the FPGA 41d shown in Fig. 3, on the basis of the connection state or the communication state to the operation control portion 2 (2n+1, 2n+2, 2n+3, ...) in each of the reefer containers 1 (1n+1, 1n+2, 1n+3, ...) via each of the signal converters 3 (3n+1, 3n+2, 3n+3, ...) shown in Fig. 1, or the alarm data.

The data collection server 100 shown in Fig. 1 corresponds to an information processing device by a computer, is provided with a data base in which a monitoring condition per user is set, and is structured such as to acquire the monitoring data so as to systematically accumulate in the data base by performing a monitoring data reception request to each of the connection processing device 4 via the monitoring side wireless LAN device 101 and the container side wireless LAN device 5, and pick up and renew the data in accordance with the request from the user.

The data collection server 100 has a function of sending a desired date as a predetermined type of monitoring image data in correspondence to the request from various data accumulated in the data base, such as all the container information and a carry-in-and-out information of the container yard accumulated via the relay personal computer 103 from the host (not shown), the monitoring data received via the wireless LAN device 101, and the like, in the case that an access is performed from the monitoring personal computer 102. Further, since plural blocks of the reefer container 1 in the container yard are normally arranged in such a manner that ten and some reefer containers are set as one block by arranging a plurality of reefer containers are laid in a horizontal direction and are piled in plural stages vertically, the monitoring data is image displayed in accordance with a list, for example, every reefer container and every block.

Further, in the case that the data collection server 100 receives the data of abnormality occurrence from the connection processing device 4, the data collection server 100 informs the monitoring personal computer 102 of abnormality occurrence in accordance with the set contents of the monitoring condition on the basis of the data base, and has a sending function of sending notice by mail to a portable telephone 106 which a person in charge of management holds, via the router 105 and the internet N. In this case, it is possible to set a plural number of the portable telephone 106 capable of the notice by mail being sent at a time when abnormality occurs. For example, in the case that it is impossible to send the notice by mail at a time when abnormality occurs, for some reasons such that a power source of the portable telephone to be called isturnedoff, the person in charge of management holding the portable telephone 106 stays in an area where a radio wave can not reach, and the other reasons, the notice by mail may be sent to another portable telephone 106.

Next, a description will be given of a motion of the system in accordance with the present embodiment provided with the structure mentioned above.

When the power source is turned on, and the he connection processing device 4 can communicate in the normal mode, the connection processing device 4 sends authentication data of the connection processing device 4 constituted by an eight-digit character string and a connection informing data constituted by a port number to a first designated IP address of the data collection server 100 set by the initial setting mode via the monitoring side wireless LAN device 101 and the container side wireless LAN device 5, for example, at three second interval, in accordance with the UDP of the port number 55000 (decimal number). Further, in the case that the monitoring data receipt request is not output from the designated IP in accordance with http, for example, even by sending at sixty times, the abnormality in the superior position is determined, and is sent to a second designated IP address, and the monitoring data receipt request is awaited. Further, in the case that the monitoring data receipt request is not output even by sending at sixty times in the same manner, the address to be sent is changed to the first designated IP address. As mentioned above, the authentication data and the connection informing data in accordance with the port number are continuously sent until the receipt request is output from any one of the first and second IP addresses.

Further, if the monitoring data receipt request is output in accordance with http from any one of the first and second designated IP addresses, the main CPU 41a of the main board 41 in the connection processing device 4 determines that the communication path is established, cancels the sending of the authentication data and the connection informing data in accordance with the port number, and sends the monitoring data on the basis of the operation state signal from the operation control portion 2 of each of the reefer containers 1 to the designated IP address of the data collection server 100 at a predetermined time interval.

The signal output from the operation control portion 2 of the reefer container 1 includes the container number, the temperature in each of the portions, the drive signal of the refrigerating machine, the optimum temperature signal, the driving signal of the defrosting device, the alarm code at a time when abnormality occurs, and the like, as described previously. Further, these signals are different in the communication method in accordance with the manufacturer and the type of the reefer container 1, however, since the connection processing device 4 communicates with each of the reefer containers 1 in accordance with the communication protocol in correspondence to the manufacturer and the type mentioned above on the basis of the serial communication circuit in each of the channels shown in Fig. 4, which is installed in the FPGA 42c in each of the channel boards 42, and can communicate with the superior position in accordance with the common type, as mentioned above, the data collection server 100 can acquire the monitoring data of all the reefer containers 1 which are different in the manufacturer and the type.

Further, in the case that communication abnormality, an alarm of optimum temperature abnormality or others occurs in any one of a lot of reefer containers 1 connected to the connection processing device 4 via the signal converter 3, the data collection server 100 receives the alarm data generated by the connection processing device 4 determining the abnormality or the alarm code sent from the reefer container 1 having the occurred abnormality via the connection processing device 4, via the container wireless LAN device 5 and the monitoring side wireless LAN device 101, thereby outputting and displaying the data on the display or the like, calling the portable telephone 106 held by the person in charge of management from the router 105 via the internet N, and sending a mail for specifying the kind of the occurred abnormality and the corresponding reefer container. Accordingly, the person in charge of management can immediately go to the reefer container in which the abnormality occurs, and can take a necessary action to the abnormality.

As the contents of the mail notified to the portable telephone 106, there are displayed a link to a web page of the system in the data collection server 100 in addition to an abnormality occurrence time and date, an address of the reefer container in which the abnormality occurs, a manufacturer name of the reefer container, and a kind of the abnormality. Further, the person in charge of management who receives the mail informing of the abnormality occurrence accesses the web page on the display of the portable telephone 106, whereby a receipt confirming data is sent to the data collection server 100. In the case that the receipt confirming data is not sent, a call is performed at a fixed time interval until it is confirmed.

In this case, in the case that the mail can not be notified at a time when the abnormality occurs for some reasons, for example, the power of the portable telephone 106 to be called is turned off, the person in charge of management who holds the portable telephone 106 stays in the area in which the radio wave does not reach, and others, it is possible to notify by mail to another portable telephone 106 registered in the data collection server 100, at a time when a predetermined time has passed after calling.

### Industrial Applicability

In accordance with the operation monitoring system on the basis of the first aspect of the present invention, it is possible to always monitor in a remote and centralized manner a lot of devices to be monitored, to which the electric power line sending and receiving means is not mounted, and which are different in the communication method in accordance with the manufacturer and the type, via the connection processing means, and the abnormality occurred in the device to be monitored is immediately informed to the communication terminal of the user. Accordingly, it is possible to make the monitoring by patrol unnecessary. Therefore, it is possible to significantly lessen the labor of the person in charge of management, it is possible to achieve the labor saving, it is possible to immediately take an action to the occurred abnormality, and it is possible to significantly improve a reliability of the management.

In accordance with the operation monitoring system on the basis of the second aspect of the present invention, since the operation control portion of the equipment to be monitored and the connection processing means are connected via the signal converting means which converts between the short-distance transmission signal to the operation control portion side and the long-distance transmission signal to the connection processing means side, the communication can be achieved even if the distance from the operation control portion to the connection processing means is comparatively long.

In accordance with the operation monitoring system on the basis of the third aspect of the present invention, since the signal converting means has the isolation means, it is possible to extend the signal transmission distance between the monitored equipment side and the connection processing means side without being affected by a disturbance such as an induced lightning stroke or the like.

In accordance with the operation monitoring system on the basis of the fourth aspect of the present invention, since the connection processing means has the isolation means, it is possible to extend the signal transmission distance between the centralized monitoring means and the communication means without being affected by a disturbance such as an induced lightning stroke or the like.

In accordance with the operation monitoring system on the basis of the fifth aspect of the present invention, since it is possible to monitor in the centralized manner the equipment to be monitored from the remote place by the data collection server and the monitoring device, and the abnormality occurrence data is sent to the monitoring device and the communication terminal device from the data collection server at a time when the abnormality occurs in the equipment to be monitored, it is possible to securely notify the abnormality occurrence.

In accordance with the operation monitoring system on the basis of the sixth aspect of the present invention, since it is possible to always monitor in the remote manner and manage in the centralized manner existence of the communication abnormality of the reefer container, the optimum temperature abnormality of the temperature inside and the internal abnormality of the operation control portion, it is possible to make the monitoring by patrol unnecessary. Further, since the occurred abnormality is immediately notified to the communication terminal device of the user, it is possible to rapidly take an action so as to prevent the perishable food or the like within the container from being damaged.

## Claims

1. An operation monitoring system comprising:
a connection processing means capable of being connected to an operation control portion in one or a plurality of plural types of equipments to be monitored; and
a centralized monitoring means capable of sending and receiving with respect to one or a plurality of connection processing means via a communication means,
wherein said connection processing means selects a different communication method in accordance with the type of the equipment to be monitored so as to acquire monitoring data, and converts the monitoring data into a predetermined format so as to send.

2. An operation monitoring system as claimed in claim 1, wherein the operation control portion of the equipment to be monitored and the connection processing means are connected via a signal converting means, and the signal converting means converts between a short-distance transmission signal to said operation control portion side and a long-distance transmission signal to said connection processing means side.

3. An operation monitoring system as claimed in claim 1 or 2, wherein the connection processing means is provided with an isolation means for insulating and isolating the signal between the signal converting means side and the centralized monitoring means side.

4. An operation monitoring system as claimed in claim 2 or 3, wherein the signal converting means is provided with an isolation means for insulating and isolating the signal between the monitored equipment side and the connection processing means side.

5. An operation monitoring system as claimed in any one of claims 1 to 4, wherein the centralized monitoring means is constituted by a data collection server collecting output data from the connection processing means via a communication network, and a monitoring device connected to the data collection server, and sends abnormality detection data detected in the case that an operation state of the equipment to be monitored is abnormal, to a predetermined communication terminal device.

6. An operation monitoring system as claimed in any one of claims 1 to 5, wherein the equipment to be monitored is a reefer container, and the centralized monitoring means monitors in a centralized manner on the basis of reception of a device information, an operation information, an abnormality information, an alarm of a communication abnormality and the like in the reefer container.
